# EUROPEAN PATENT APPLICATION

(11) **EP 3 179 412 A1**
(43) Date of publication of application: **14.06.2017**
(21) Application number: 15828913.2
(22) Date of filing: 10.06.2015
(51) Int. Cl.: G06K 19/077

(54) **RFID APPARATUS FOR BEING IMPLANTED INTO RUBBER TIRE AND PROCESSING METHOD THEREFOR**

(30) Priority: 04.08.2014 CN 201410378858
(71) Applicant: MESNAC CO., LTD., Shibei District Qingdao Shandong 266042 (CN)
(72) Inventor: DONG, Lanfei, Qingdao Shandong 266042 (CN); YAO, Yong, Qingdao Shandong 266042 (CN); CHEN, Haijun, Qingdao Shandong 266042 (CN); SUN, Peifeng, Qingdao Shandong 266042 (CN); TENG, Xuezhi, Qingdao Shandong 266042 (CN)
(74) Representative: KIPA AB
(86) International application number: PCT/CN2015/081125
(87) International publication number: WO 2016/019759

(57) **Abstract**

Provided are A RFID device implanted inside rubber tires, and a processing method for the RFID device, the RFID device comprises a radio frequency chip (1), antenna pins (2) on the radio frequency chip (1), and antennae (3) connected to the antenna pins (2), characterized in that the antenna pins (2) are connected to the antennae (3) with bolt-shaped structures (4), the radio frequency chip (1), the antenna pin (2), the bolt-shaped structure (4) and one end of the antenna (3) are packaged in a sleeve (5) with smooth surface, the other end of the antennae (3) extends out from the sleeve (5). Therefore, the substrate used in the RFID tag of the prior arts is removed, and hence, the processing and quality problems caused by the solder of chip or substrate and the damage of rubber caused by being cut by the sharp edges are avoided, and therefore the production efficiency and the quality of product is enhanced, and the connection between antenna pins (2) and antennae (3) is solid.

## Description

### Field of The Technology

The invention belongs to the technical fields of rubber product and electronic information technology, and relates to an improvement in RFID (radio frequency tag) structure, and more specifically the invention is a RFID device implanted inside rubber tires.

### Background of The Invention

RFID (radio frequency tag) is a non-contact electronic tag capable of realizing automatic identification. Every RFID tag has its own unique identification code. When being implanted inside an information carrier (such as rubber tires) or being attached to the surface of an information carrier, RFID tag could be integrated with the carrier as a whole. Driven by external read-write equipments, the RFID tag could send, read and write data at any time, as well as supervise the state of the carrier during the entire process as in production, sales, utilization and compensation in real time. RFID (radio frequency tag) has been widely used in different fields.

A RFID (radio frequency tag) device mainly comprises a chip (integrated circuit), a substrate (a printed circuit board with certain shape) and antennae, wherein the chip is soldered on the substrate through its pins and an end of the antennae is also soldered on the substrate. The RFID tag is implanted inside tires during tire formation and integrated with tires by high temperature vulcanization. The RFID tag is being used during the entire life cycle of tires to record certain information, thereby being helpful in solving problems in sales, anti-counterfeiting, anti-fraud, compensation and the like of tire production.

The prior art of RFID (radio frequency tag) used inside rubber tires has several shortcomings:
1. The substrate structure and SMT solder printing process is used, wherein the size of substrate is relatively small. Hence the production is in need of putting multiple pieces together with special clamping tools to grasp the small size substrate, also involves procedures of sorting out and edging after soldering. The production process is complicated and demands much manual work, which leads to uneven quality of RFID tag which makes negative impact on mass production.
2. The substrate is thin with sharp edges. Although the RFID tag is capable of being integrated with rubber in a relatively good state during tire formation, the deformation and the yield of tire exerts friction inside the rubber, which leads to high possibility of being cut by the substrate during the process or damage inside the tire and potential risk of safety.
3. The RFID tag of prior arts has different structures in different sides. If the RFID tag is vertically arranged within an interlayer of rubber tire, bubbles may emerge and are difficult to discharge during formation, further leads to the decline of tire quality. Moreover when being automatically implanted in tires during mass production, the RFID electronic tag demands to be distinguished the front side with the back side and its implant state, and therefore the design of automatic implant device become much more difficult.
4. The RFID tag sends and receives data relying on the connection between antenna and RF module. However, the stretch and deformation of tire during production or usage may cause the separation of the antenna and RF module due to break-up, damage or aging, and further causes failure of RFID tag.

### Summary of The Invention

It is the objective of this invention to overcome the shortcomings of the prior art and to provide a RFID device implanted inside rubber tires, where the substrate is removed by improving the shape and structure of the chip, and therefore problems caused by processing and quality of the solder between the chip and the substrate can be eliminated, and the rubber can be avoided being cut by the sharp edges of the substrate. The processing could be simplified to ensure the quality of rubber tire product. Additionally, the invention also changes the structure between the chip pin and the antenna to establish a more solid connection.

A RFID device implanted inside rubber tires comprises a radio frequency chip, antenna pins on the radio frequency chip, and antennae connected to the antenna pins, the RFID device is characterized in that, the antenna pins are connected to the antennae with bolt-shaped structures, the radio frequency chip, the antenna pin, the bolt-shaped structure and one end of the antenna are packaged in a sleeve with smooth surface, and the other end of the antenna extend out from the sleeve.

An improved technical solution is that the sleeve is cylindrical and provided with two end openings. Two antenna pins are provided, respectively connected to two ends of the radio frequency chip. The two antenna pins respectively connected to antennae with two bolt-shaped structures, the two antennae respectively extend out from the end openings of the cylindrical sleeve.

An improved technical solution is that the bolt-shaped connection part of the antenna pin is made of gold.

An improved technical solution is that the antenna is made of a conductive material with good ductility and plasticity, the part of antenna extending out from the sleeve is twined as spiral or bended as triangle.

The invention also provides a processing method for the RFID device, and specifically, the RFID device comprises a radio frequency chip, an antenna pin on the radio frequency chip, and an antenna connected to the antenna pin, characterized in that at first connecting the antenna pin to the antenna with a bolt-shaped structure, and then packaging the radio frequency chip, the antenna pin and the antenna in a sleeve with smooth surface and then shaping the antenna.

An improved technical solution is that at least one end of the antenna extends out from the sleeve.

An improved technical solution is that one end of the antenna pin extends out from the sleeve.

An improved technical solution is that the part of antenna extending out from the sleeve is twined as spiral or bended as triangle.

Compared with the prior art, the present invention has following advantages that:
There is no substrate used in the RFID device (Radio Frequency tag) disclosed in the present invention, and hence the damage of rubber caused by being cut by the sharp edges of the substrate and the quality problems caused by the complicated solder process for the radio frequency chip and substrate can be avoided, and therefore the product quality and the efficiency could be highly improved, the antenna pin connected to the antenna with a bolt-shaped structure and part of the bolt-shaped structure is packaged inside a sleeve with smooth surface, and hence, the solid connection between the antenna pin and antenna is ensured. The invention provides a flexible way for antenna design with comparatively low production cost.

### Brief Description of The Drawings

Figure 1 shows the inner structure of the RFID device implanted inside rubber tires;
Figure 2 is a perspective view of an embodiment of the inner structure of the RFID device implanted inside rubber tires;
Figure 3 shows a spiral antenna of the RFID device implanted inside rubber tires after being completely processed;

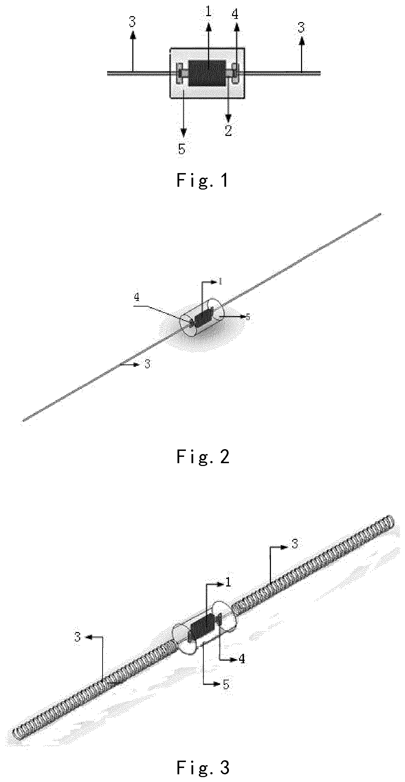

As shown from the Figure 1 to Figure 3, the reference numbers are the radio frequency chip 1, the antenna pin 2, the antenna 3, the bolt-shaped connection 4 and the sleeve 5.

### Detailed Embodiment of the Invention:

In order to make the purposes, technical solution and the advantages of the embodiments of the present invention become clearer. Embodiments of the present invention will now be described with reference to the attached drawings. Clearly, described embodiments are part of embodiments of the invention, not entire embodiments. Other embodiments obtained by person skilled in the art based on the embodiments of the invention without creative work do not depart from the spirit and scope of the present invention.

The present invention will now be described in detail with reference to the attached drawings:
Shown in the Figure 1 to Figure 3 is an embodiment of the RFID device implanted inside rubber tire, the RFID device comprises: a radio frequency chip 1, antenna pins 2 on the radio frequency chip 1, and the antennae 3 connected to the antenna pins 2 with bolt-shaped structures 4. The radio frequency chip 1, the antenna pins 2, the bolt-shaped structures 4 and one end of the antenna is packaged in a sleeve 5 with smooth surface. The other end of the antenna extends out from the sleeve 5. Additionally, a part of structure of antenna pins 2 may extend out from the sleeve 5(omitted in the Figures).

In the embodiment shown in Fig. 2, the sleeve 5 is cylindrical with two opening ends. Two antenna pins 2 are provided and respectively connected with an end of the radio frequency chip 1. The two antenna pins 2 are respectively connected to two antennae 2 with two bolt-shaped structures 4 respectively, and two antennae 3 respectively extend out from the two opening ends of the cylindrical sleeve.

In order to ensure a solid connection, the bolt-shape structure 4 is made of gold. In order to simplify the shape of the antennae, the material of the antennae 3 is conductor with good ductility and plasticity.

In the embodiment shown in the Fig.3, the part of antennae 3 extending out from the sleeve 5 is twined as spiral.

During the production for processing electronic tag, at first the antenna pins 2 are being well connected to the antennae 3 with bolt-shaped structure 4 and then being packaged, and then shaping the antennae 3, the part of antennae 3 extending out from the sleeve 5 also could be bended as triangle.

The shape of package of the radio frequency chip 1 is not limited as a cylinder, and also could be designed as sphere or any other shapes with blunt angles in order to avoid cutting the rubber. However, the number of the antenna pins 2 should be even.

It should be understood that the above embodiments are merely illustrative of the technical solutions of the present invention and should not be construed as limitations on the invention. While the invention has been described in detail with reference to the embodiments, one skilled in the art can readily appreciate that the technical solutions of the present invention may be modified or some of the technical features may be replaced equivalently, and these modifications or substitutions do not make the corresponding technical solutions depart from the spirit and scope of embodiments of the present invention.

## Claims

1. A RFID device implanted inside rubber tires comprises: a radio frequency chip, antenna pins on the radio frequency chip, and antennae connected to the antenna pins, **characterized in that** the antenna pins are connected to the antennae with bolt-shaped structures, the radio frequency chip, the antenna pin, the bolt-shaped structure and one end of the antenna are packaged in a sleeve with smooth surface, the other end of the antenna extends out from the sleeve.

2. A RFID device implanted inside rubber tires according to the claim 1, **characterized in that** the sleeve is cylindrical and provided with two end openings; two antenna pins are provided, respectively connected to two ends of the radio frequency chip, the two antenna pins are connected to the two antennae with two bolt-shaped structures, the two antenna pins respectively extend out from the two end openings of the cylindrical sleeve.

3. A RFID device implanted inside rubber tires according to the claim 1 or the claim 2, **characterized in that** the bolt-shaped connection part of the antenna pin is made of gold.

4. A RFID device implanted inside rubber tires according to the claim 1 or the claim 2, **characterized in that** the antenna material is conductor with good ductility and plasticity, the part of antenna extending out from the sleeve is twined as spiral or bended as triangle.

5. A RFID device implanted inside rubber tires according to the claim 3, **characterized in that** the antenna material is conductor with good ductility and plasticity, the part of antenna extending out from the sleeve is twined as spiral or bended as triangle.

6. A processing method for a RFID device implanted inside rubber tires, the RFID device comprises: a radio frequency chip, antenna pins on the radio frequency chip, and antennae connected to the antenna pins, **characterized in that** at first the antenna pins are being well connected to the antennae with bolt-shaped structure and then the radio frequency chip, the antenna pin and the antenna are being packaged in a sleeve with smooth surface, and then the antennae are being shaped.

7. A processing method for a RFID device implanted inside rubber tires according to the claim 6, **characterized in that** at least one end of the antenna extends out from the sleeve.

8. A processing method for a RFID device implanted inside rubber tires according to the claim 7, **characterized in that** one end of the antenna pin extends from the sleeve.

9. A processing method for a RFID device implanted inside rubber tires according to the claim 6, **characterized in that** the part of the antenna extending out from the sleeve is twined as spiral or bended as triangle.
